(19) Europäisches Patentamt
European Patent Office
Office européen des brevets

(11) **EP 3 792 708 A1**

(12) **EUROPEAN PATENT APPLICATION**

(43) Date of publication:
**17.03.2021 Bulletin 2021/11**

(51) Int Cl.:
**G05B 19/042** *(2006.01)* **G05B 13/04** *(2006.01)*
**G06Q 50/04** *(2012.01)* **G05B 23/02** *(2006.01)*

(21) Application number: **19196526.8**

(22) Date of filing: **10.09.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **L'AIR LIQUIDE, SOCIETE ANONYME POUR L'ETUDE ET L'EXPLOITATION DES PROCEDES GEORGES CLAUDE**
**75007 Paris (FR)**

(72) Inventors:
• JANOSSY, Lea
  **92400 Courbevoie (FR)**
• VARGAS AVILA, Diana
  **40235 Düsseldorf (DE)**

(74) Representative: **Air Liquide**
**L'Air Liquide S.A.**
**Direction de la Propriété Intellectuelle**
**75, Quai d'Orsay**
**75321 Paris Cedex 07 (FR)**

(54) **DETERMINATION OF RELEVANT FUNCTIONING PARAMETERS IN AN INDUSTRIAL PLANT**

(57) The present invention concerns an optimisation method for the management of an industrial plant comprising:
- selecting functioning parameters of industrial equipment adapted to implement an industrial process whose performance is characterized by a cost function;
- generating target functioning data of said functioning parameters,
- calculating a distance between current functioning data of said industrial equipment and said target functioning data;

- calculating, for each selected functioning parameter, a statistical correlation coefficient characterizing a correlation between said selected functioning parameter and the cost function;
- selecting, on the basis of the calculated distance and each statistical correlation coefficient, a set of relevant functioning parameters having a largest impact on the cost function; and
- perturbing said industrial equipment according to the set of relevant functioning parameter to improve the performance of the industrial process.

FIG. 1

EP 3 792 708 A1

**Description**

The field of the present invention relates to the management of an industrial plant, for instance an industrial plant comprising an air separation unit or a steam methane reforming plant, and more specifically the determination of relevant functioning parameters.

The management of an industrial plant and the optimisation of the industrial processes implemented within this plant present an important technological issue, since many aspects have to be taken into account. Indeed, an industrial process is often implemented using a large number of industrial equipment and the operating mode of these industrial equipment may depend on many parameters. Some of these parameters can be modified, while others are constraints with which it is necessary to make do, for instance the external temperature.

The known methods to optimize an industrial process consist of planning the required operating mode of the different industrial equipment in order to perform the industrial process. However, such methods have several drawbacks. In particular, these methods require significant logistical resources since it is then necessary to adjust the various functioning parameters of all the industrial equipment required to implement the industrial process. Moreover, such methods do not allow real-time action and, once planning is done, have very little flexibility. Finally, taking into account all the industrial equipment and all the operating parameters of these industrial equipment, even without taking into account the fact that some parameters are non-modifiable, requires algorithms with high complexity and with a large calculation time.

The present invention seeks to improve the situation.

To this end, the present invention provides an optimisation method for the management of an industrial plant. The method is implemented using a processing unit and comprises:

- selecting one or more functioning parameters of one or more industrial equipment adapted to implement an industrial process whose performance is characterized by a cost function;
- generating target functioning data of the one or more functioning parameters,
- calculating a distance between current functioning data of the one or more industrial equipment and the target functioning data, the current functioning data being collected by one or more sensors;
- calculating, for each selected functioning parameter, a statistical correlation coefficient characterizing a correlation between the selected functioning parameter and the cost function;
- selecting, on the basis of the calculated distance and each statistical correlation coefficient, a set of at least one relevant functioning parameters having a largest impact on the cost function among the one or more functioning parameters; and
- perturbing the one or more industrial equipment according to the set of at least one relevant functioning parameter to improve the performance of the industrial process.

Such a method makes it possible to determine in real-time the functioning parameters having the most significant impact on the industrial process. The operation of the industrial plant can thus be improved by perturbing a minimum of industrial equipment.

For instance, the selection one or more functioning parameters comprises filtering:

- non-numeric functioning parameters; and/or
- functioning parameters taking only one value; and/or
- functioning parameters whose value cannot be modified.

To be certain that the functioning parameters detected as particularly relevant by the optimisation method can actually be modified, it is advantageous to firstly filter the parameters listed above.

According to an embodiment, the optimisation method further comprises retrieving historical functioning data of the one or more industrial equipment from an historical functioning database, wherein the target functioning data are generated from the retrieved historical functioning database.

The historical functioning database may be built as follows:

- collecting, using the one or more sensors, functioning data of the one or more industrial equipment, said functioning data comprising one value for each functioning parameter of the one or more industrial equipment;
- determining a value of the cost function corresponding to the collected functioning data;
- storing the functioning data in the historical functioning database, the functioning data being associated with the corresponding value of the cost function.

According to an embodiment, the historical functioning data being associated in the historical functioning database with a value of the cost function corresponding to the performance of the industrial process when the latter is performed by the one or more industrial equipment functioning according to the historical functioning data, the target functioning data comprising a set of one or more target values respectively associated with the one or more selected functioning parameters, the target functioning data are generated as follows:

- determining N sets of historical functioning data from the historical functioning database, N being a positive integer, a set of historical functioning data comprising one value for each selected functioning parameter, so that the N sets of historical functioning data correspond to N values closest to an optimum of the cost function; and
- for each selected functioning parameter, determining a target value according to the N values of said functioning parameter respectively associated with the N sets of historical functioning data.

The target functioning data comprise the set of target values.

In the historical functioning database, several sets of historical functioning data are stored. A set of historical functioning data comprise a set of values. More specifically, in a set of historical functioning data, there is exactly one value for each functioning parameter. All the values of the same set of historical functioning data have been measured at the same moment in the industrial plant. In the other words, at this given moment, the industrial plant was functioning according to the corresponding set of historical functioning data. In addition, the set of historical functioning data is associated with a value of the cost function. This value of the cost function characterizes the performance of the industrial process at the corresponding moment. In the present embodiment, the N best sets of historical functioning data are selected to determine the target functioning data. It is particularly advantageous to use historical functioning data to determine the perturbation direction of the industrial equipment.

For at least one selected functioning parameter, the target value corresponds for instance to a median of the N values of the functioning parameter respectively associated with the N sets of historical functioning data.

For at least one selected functioning parameter, the target value corresponds for instance to an average of the N values of the functioning parameter respectively associated with the N sets of historical functioning data.

According to an embodiment, the optimisation method further comprises filtering each non-reachable set of historical functioning data before determining N sets of historical functioning data.

For instance, a set of historical functioning data is non-reachable if the absolute difference between the current value of a non-modifiable functioning parameter and the value of said non-modifiable functioning parameter corresponding to said set of historical functioning data is greater than or equal to a predetermined threshold.

When an industrial process is performed within an industrial plant, the performance of this industrial process depends on modifiable functioning parameters but may also depend on non-modifiable functioning parameters. Typically, the external temperature is one of the most restrictive non-modifiable functioning parameters. In such a case, it is particularly advantageous to filter the sets of historical functioning data that are non-reachable. For instance, if the current external temperature is equal to 303 K, it is clear that the conditions are radically different from a situation in which the external temperature is equal to 273 K. Consequently, since it is not possible to modify the external temperature that is a non-modifiable functioning parameter, it is better to filter the sets of historical functioning data obtained when the external temperature was equal or close to 273 K.

According to an embodiment, the current functioning data comprising a set of one or more current values respectively associated with said one or more functioning parameters and the target functioning data comprising a set of one or more target values respectively associated with said one or more selected functioning parameters, calculating the distance between the current functioning data and the target functioning data comprises calculating, for each selected functioning parameter, the difference between the current value and the target value of the selected functioning parameter, the distance being defined as a set of said differences.

The determination of a distance as defined above allows estimating how far the current functioning of the industrial equipment is from a more optimal situation.

According to an embodiment, the optimisation method further comprises normalizing each difference associated with a functioning parameter by dividing said difference by the difference between a greatest value and a lowest value taken by the functioning parameter.

When several functioning parameters are taken into consideration, it is advantageous to normalize the different functioning parameters to prevent the present method from being influenced by the size of the respective value ranges within which the functioning parameters vary.

According to an embodiment, the selection of the set of at least one relevant functioning parameter comprises:

- multiplying, for each functioning parameter, the corresponding normalized difference between the current functioning value and the target functioning value and the corresponding statistical correlation coefficient;
- selecting a predetermined number P of functioning parameters corresponding to the greatest P values of the products, P being a positive integer.

According to an embodiment, the optimisation method further comprises filtering each selected functioning parameter verifying one of the following conditions:

- the value of the cost function increases when the value of the functioning parameter increases and the current functioning value of the functioning parameter is lower than the target functioning value; or
- the value of the cost function decreases when the value of the functioning parameter increases and the current functioning value of the functioning parameter is greater than the target functioning value.

In such an embodiment, particular attention is paid to the direction in which the functioning parameters to be selected must evolve. In the present case, the cost function is defined so that the value of the cost function must decrease to correspond to an improvement of the industrial process.

The present invention also concerns a computer program, comprising instructions for implementing the method described above, when said instructions are implemented by at least one processor.

Finally the present invention aims an optimisation system for the management of an industrial plant, comprising:

- one or more sensors adapted for collecting current functioning data relating to functioning parameters of a plurality of industrial equipment;
- a processing unit configured to :

  ○ select one or more functioning parameters of one or more industrial equipment adapted to implement an industrial process whose performance is characterized by a cost function;
  ○ generate target functioning data of the one or more functioning parameters,
  ○ calculate a distance between the current functioning data of the one or more industrial equipment and the target functioning data;
  ○ calculate, for each selected functioning parameter, a statistical correlation coefficient characterizing a correlation between the selected functioning parameter and the cost function;
  ○ select, on the basis of the calculated distance and each statistical correlation coefficient, a set of at least one relevant functioning parameters having a largest impact on the cost function among the one or more functioning parameters; and

- a management module adapted to perturb the one or more industrial equipment according to the set of at least one relevant functioning parameter to improve the performance of the industrial process.

According to an embodiment, the optimisation system further comprises a historical functioning database adapted to store historical functioning data of the plurality of industrial equipment.

Other features and advantages of the invention will become apparent from the following description provided for indicative and non-limiting purposes, with reference to the accompanying drawings, wherein:

- **FIG. 1** illustrates an industrial plant and an optimisation system according to the invention;
- **FIG. 2** illustrates a historical functioning database storing historical functioning data of a plurality of industrial equipment of the industrial plant;
- **FIG. 3** illustrates the building of the historical functioning database; and
- **FIG. 4** illustrates an optimisation method for the management of the industrial plant according to the invention.

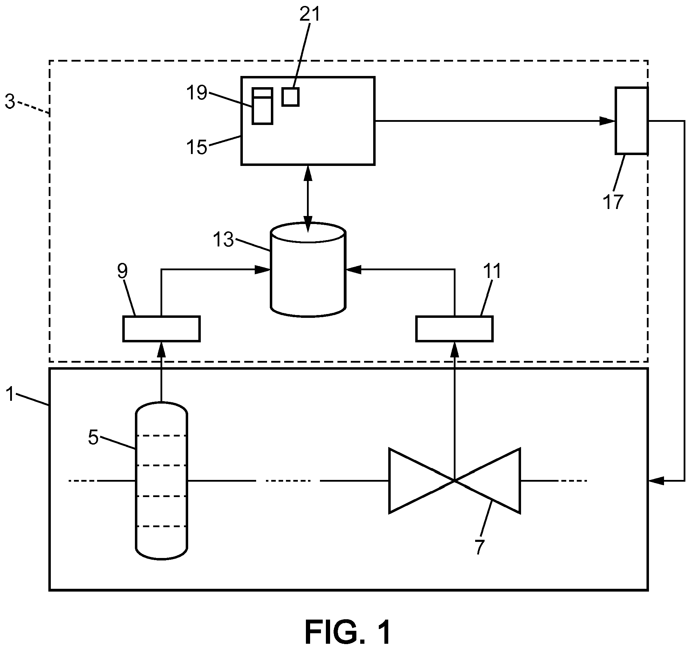

**FIG. 1** illustrates an industrial plant 1 and an optimisation system 3. More precisely, only a part of the industrial plant 1 is schematically illustrated here.

The industrial plant 1 is adapted to perform industrial processes. For instance and as illustrated in **FIG. 1**, the industrial plant 1 may comprise an air separation unit adapted to extract different air components from an air fluid which is supplied to the air separation unit. The air separation unit is therefore adapted to isolate different air components for industrial purposes.

For example, the air separation unit is adapted for extracting dinitrogen, dioxygen and also rare gases, in particular argon. The separation of argon from other air components to obtain an argon fluid as pure as possible has many industrial applications. Argon being an inert gas, it is for instance used as an atmosphere for chemical reactions. Argon is also widely used in the manufacture of incandescent bulbs since it has the advantage of not reacting with the filament of the bulb. Of course, the other air components also have several industrial applications and their extraction is made possible by industrial processes implemented by the air separation unit.

The industrial plant 1 may also comprise a steam methane reforming plant. A steam methane reforming plant produces hydrogen, carbon monoxide and carbon dioxide by the steam reforming of methane. Such a plant is also called HyCo plant (corresponding to the abbreviation of (Hydrogen-Carbon monoxide plant). Hereafter, it is considered as an example that the part of the industrial plant 1 illustrated here is a part of an air separation unit. Of course, the skilled person understands here that the industrial plant 1 may be any kind of industrial plant adapted to perform industrial processes. Here the air separation unit and the steam methane reforming plant are only given as examples of industrial plants.

The part of the air separation unit included in the industrial plant 1 illustrated here comprises a plurality of industrial equipment. Here, the part of the air separation unit comprises a distillation column 5 and a valve 7.

The distillation column 5 and the valve 7 have only been illustrated here by way of example and the industrial plant 1 may also include other industrial equipment not shown here such as compressors, pipes, liquefiers, liquid tanks, buffers or fluid sources.

The distillation column 5 is adapted to be supplied with an air fluid and to perform a distillation process. The distillation process makes it possible to isolate different air components.

The distillation column 5 may be characterized by a yield, also called efficiency, for instance a dinitrogen yield, corresponding to the proportion of dinitrogen contained in the air fluid supplying the distillation column 5 which can be recovered and isolated thanks to the distillation process implemented by the distillation column 5. Of course, such a yield may also be defined for each air component. Like many industrial equipment, the operation of a distillation column may be characterized by one or more functioning parameters and some of its functioning parameters may be modified in real-time to change the operating mode of the distillation column.

The valve 7 is adapted to modify the flow rate of a fluid. For instance, the valve 7 is adapted to modify the flow rate of a fluid at the outlet of the distillation column 5 to obtain a target flow rate. The flow rate is one of the functioning parameters of a valve.

Typically, the valve 7 includes an actuator and a pipe (not shown in **FIG. 1**). The actuator is arranged to modify the flow rate of the fluid flowing along the pipe of the valve 7 so as to obtain the target flow rate. The position of the actuator of the valve 7 may be controlled by a control signal emitted by a controller.

The optimisation system 3 is adapted to manage the industrial plant 1. More specifically, the optimisation system 3 is adapted to optimise in real time the operation of the industrial plant 1 during the implementation of industrial processes by determining relevant functioning parameters to be modified, that is to say the functioning parameters having the largest impact of the performance or the yield of the industrial processes performed within the industrial plant 1. The optimisation system 3 is also adapted to perturb one or more of the industrial equipment according to the functioning parameters detected as relevant for improving the performance of the industrial processes.

More particularly, the optimisation system 3 is adapted to get as close as possible to an optimum of a cost function characterizing the performance of an industrial process. In other words, the optimisation system 3 is adapted to determine, for a given industrial process performed by one or more industrial equipment, one or more functioning parameters particularly relevant in the sense that they have the largest impact on the cost function characterizing the industrial process. The goal is to perturb one or more industrial equipment according to the functioning parameters to get as close as possible to the optimum of the cost function. The optimisation system 3 thus allows minimising total costs inherent in the operation of the industrial equipment of the industrial plant 1 including energy costs, maintenance costs, purchase costs, transport costs and/or emission costs. The optimisation system 3 may also allow improving the efficiency and the yield of the industrial process performed using the industrial equipment.

As illustrated in **FIG. 1**, the optimisation system 3 comprises one or more sensors, here a first sensor 9 and a second sensor 11, an historical functioning database 13 and a processing unit 15. As illustrated in **FIG. 1**, the optimisation system 3 may also comprise a management module 17.

The sensors are adapted for collecting current functioning data relating to functioning parameters of industrial equipment of the industrial plant 1. For instance, the historical functioning data can be related to one or more of the following parameters: a temperature, a flow rate, a pressure and a power. Here, power refers for instance to power consumption. A sensor is adapted to the industrial equipment with which it is associated to measure the functioning parameters characterizing the industrial equipment. The temperature, flow rate, pressure and power are among the most relevant parameters to measure for certain industrial equipment. On the other hand, for other industrial equipment, the associated sensors measure other types of parameters.

In the embodiment illustrated in **FIG. 1**, the industrial plant 1 comprises an air separation unit of which only a part is illustrated and includes the distillation column 5 and the valve 7. The sensor 9 is associated to the distillation column 5, whereas the sensor 11 is associated to the valve 7.

The first sensor 9 is adapted for collecting current functioning data of the distillation column 5. In other words, when the distillation column 5 is operating, the first sensor 9 is adapted to measure continuously or at regular time intervals, the evolution of the value of certain parameters characterizing the operation of the distillation column 5. As explained above, the distillation column 5 is characterized by a yield. The first sensor 9 is therefore, for instance, adapted to measure the yield of the distillation column 5 as well as the functioning parameters having an impact on the distillation process.

The second sensor 11 is adapted to collect current functioning data of the valve 7. In other words, when the valve 7 is operating, the second sensor 11 is adapted to measure, continuously or at regular time intervals, the evolution of the value of certain parameters characterizing the operation of the valve 7. Typically, the second sensor 11 measures at least the evolution of the flow rate of the fluid flowing in the pipe of the valve 7.

In the example described here, each industrial equipment is associated with a single sensor. Nevertheless, industrial equipment can be associated with several sensors, each measuring at least part of the parameters characterizing the industrial equipment.

In addition, the sensors, for instance the first sensor 9 and the second sensor 11, are adapted to transmit the current functioning data collected to the historical functioning database 13.

The historical functioning database 13 is adapted to store historical functioning data of the plurality of industrial equipment. As previously explained, the historical functioning database 13 is adapted to receive current functioning data collected by the sensors and relating to functioning parameters of the plurality of industrial equipment.

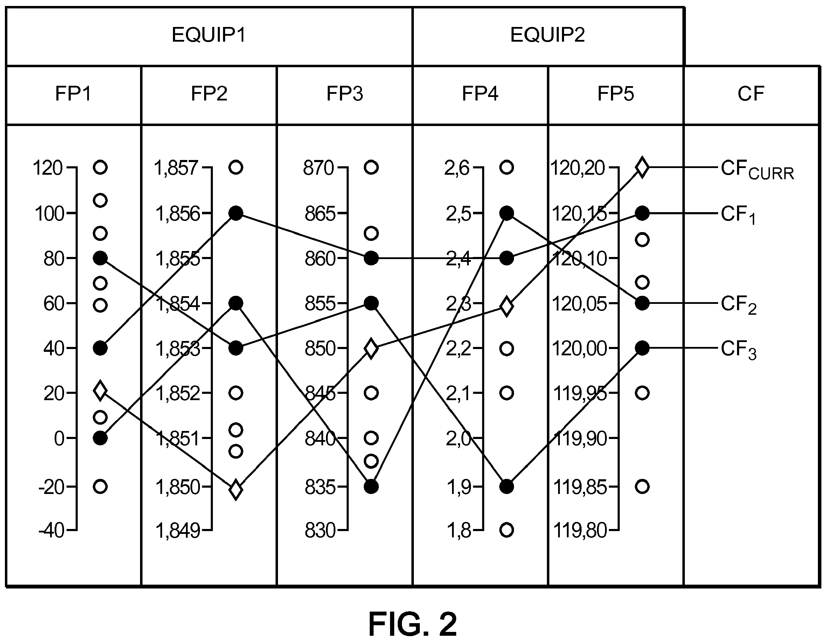

The historical functioning database 13 will now be described in reference to the example illustrated in **FIG. 2**.

In the embodiment illustrated in **FIG. 2**, two industrial equipment EQUIP 1 and EQUIP2 are referenced in the historical functioning database 13. The first industrial equipment EQUIP 1 is associated in the historical functioning database 13 with three functioning parameters FP1, FP2 and FP3, whereas the second industrial equipment EQUIP2 is associated in the historical functioning database 13 with two functioning parameters FP4 and FP5. For each industrial equipment and for each functioning parameter, historical functioning data are stored in the historical functioning database 13. The historical functioning data correspond to values taken by the functioning parameters and collected by the sensors during the operation of the corresponding industrial equipment. Considering for instance the fourth functioning parameter FP4 of the second industrial equipment EQUIP2, it appears that the values taken by the fourth functioning parameter FP4 when the second industrial equipment operates are comprised between 1,8 and 2,6.

In the present case, the first industrial equipment EQUIP 1 may correspond to the distillation column 5 and the second industrial equipment EQUIP2 may correspond to the valve 7. In such a case, the fifth parameter FP5 may correspond to the flow rate and the unit of the values stored in the historical functioning database 13 is for instance the cubic meter per hour ($m^3$/h). However, for the sake of generalization, it is not specified in the following description what the first and second industrial equipment EQUIP1 and EQUIP 2 correspond to, what are the corresponding functioning parameters or what are the respective units of these different functioning parameters.

In **FIG. 2**, the values collected by the sensors and stored in historical functioning database 13 are schematically represented as circles, whereas the current value of a functioning parameter are represented as diamonds.

Furthermore, as explained above, performance of an industrial process may be characterized by a cost function. The value of such a cost function depends on the functioning parameters of one or more industrial equipment. In other words, if the value of a functioning parameter changes, the value of the cost function also changes. Thus, the historical functioning data stored in the historical functioning database 13 may be associated with a value of the cost function corresponding to the performance of the industrial process when the latter is performed by the industrial equipment functioning according to these functioning data. In other words, when the respective values of functioning parameters of industrial equipment are collected by the various sensors at a given moment, the cost function characterizing the performance of the industrial process actually performed by the industrial equipment has a given value. This given value may then be associated with the set of values collected by the sensors, this set of values corresponding to the current functioning data intended to be stored in the historical functioning database 13.

Still in reference to **FIG. 2**, the current value of each functioning parameter is represented as a diamond. For instance, the current value of the first functioning parameter FP1 is equal to 20, the current value of the second functioning parameter FP2 is equal to 1,850, the current value of the third functioning parameter FP3 is equal to 850, the current value of the fourth functioning parameter FP4 is equal to 2,3 and the current value of the fifth functioning parameter FP5 is equal to 120,20. In addition, the current value of the cost function CF characterizing the performance of the industrial process performed by the first and second industrial equipment EQUIP 1 and EQUIP2 is noted $CF_{CURR}$ and is associated with the set of current values in the historical functioning database 13.

As previously explained, one of the purposes of the optimisation system 3 is to get as close as possible to the optimum of the cost function for an industrial process. In the historical functioning database 13 illustrated in **FIG. 2**, the three sets of historical functioning data corresponding to the three values closest to the optimum of the cost function CF, a set of historical functioning data comprising one value for each functioning parameter, are illustrated in particular as disks. For instance, it appears that, when the value of the first functioning parameter FP1 is equal to 40, the value of the second functioning parameter FP2 is equal to 1,856, the value of the third functioning parameter FP3 is equal to 860, the value of the fourth functioning parameter FP4 is equal to 2,4 and the value of the fifth functioning parameter FP5 is equal to 120,15, the corresponding value of the cost function CF is equal to $CF_1$. Similarly, **FIG. 2** also illustrates the historical functioning data corresponding to the other two values $CF_2$, $CF_3$ closest to the optimum of the cost function CF.

In the context of the present invention, the optimum of the cost function CF is not necessarily the real mathematical optimum but the historical optimum. In other words, the optimum discussed here is the best value of the cost function CF that has been recorded and stored under similar operating conditions.

A set of historical functioning data stored in the historical functioning database 13 corresponds to the different values of the functioning parameters at the same time. For instance, in reference to **FIG. 2** and considering the set of historical functioning data corresponding to the value $CF_3$ of the cost function CF, the value of the first functioning parameter FP1 is equal to 80 and the value of the fourth functioning parameter FP4 is equal to 1,9 at the same time.

More generally, it must be understood here that the historical functioning database 13 is adapted to store historical functioning data collected by several sensors in order to have, for each functioning parameter of each industrial equipment, the values of these functioning parameters during the operation of the industrial. Of course, it must be noted that the same industrial equipment may be used for performing a plurality of different industrial processes and each industrial process may be characterized by several cost functions, each cost function corresponding to a particular aspect of the performance or the yield of the industrial process.

The processing unit 15 is configured to determine, on the basis of the historical functioning data stored in the historical functioning database 13 and the current functioning data collected by the sensors, the one or more functioning parameters having the largest impact on the performance of an industrial process. The processing unit 15 allows the determination of which functioning parameter has to be modified in priority to improve the performance of the industrial process, that is to say to get as close as possible to the optimum of the cost function corresponding to this industrial process.

The functioning of the processing unit 15 will be detailed thereafter.

As illustrated in **FIG. 1**, the processing unit 15 comprises a memory 19 and a processor 21.

The memory 19 is configured to store a computer program which includes instructions whose execution by the processor 21 causes the functioning of the processing unit 15.

Finally, the management module 17 is adapted to perturb the industrial equipment according to the functioning parameters detected as particularly relevant by the processing unit 15 for improving the performance of the industrial process. In other words, once the functioning parameters having the largest impact on the cost function characterizing the performance of the industrial process are determined by the processing unit 15, the management module 17 allows perturbing or setting the industrial equipment whose functioning depends on these relevant functioning parameters in order to modify specifically the values of said functioning parameters to get as close as possible to the optimum of the cost function. It must be understood here, that the management module 17 controls and perturbs the industrial equipment in real-time.

For instance, in reference to the example illustrated in **FIG. 1**, if it is detected that the flow rate of the valve 7 is a relevant functioning parameter having a large impact on the performance of an industrial process performed using the valve 7, the management module 17 is adapted to control the valve 7 to modify the value of the flow rate to reach a target value.

The management module 17 can be for instance a human-machine interface (also known as HMI) adapted to be used by an operator to set or perturb the industrial equipment of the industrial plant 1 on the basis of the result computed by the processing unit 15. Alternatively, the management module 17 can be automated and controls the industrial equipment of the industrial plant 1 upon receiving the result of the analysis performed by the processing unit 15.

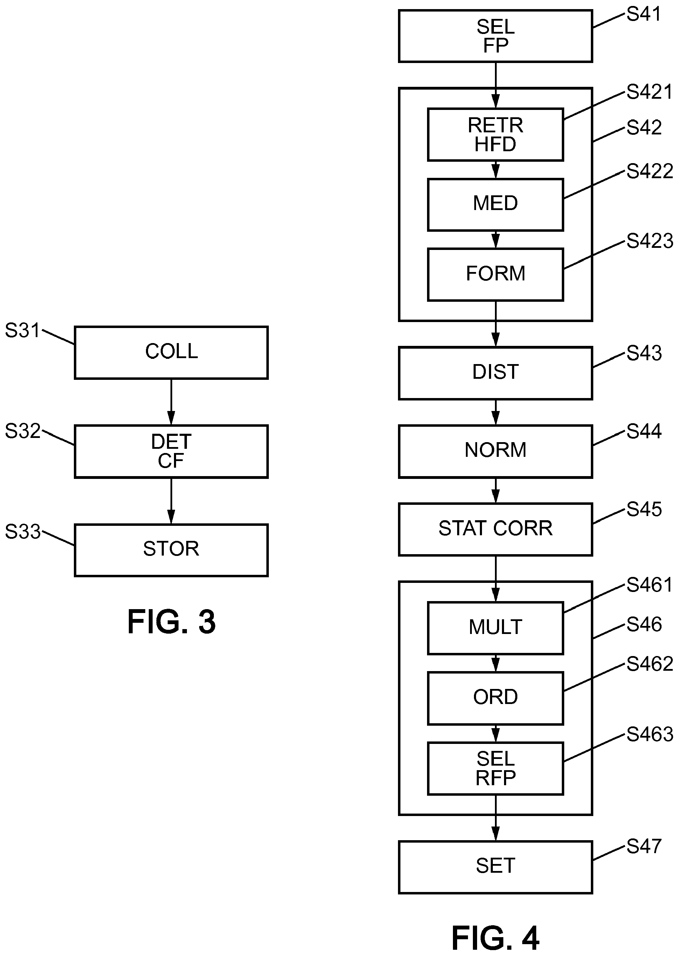

An optimisation method for the management of an industrial plant will now be described in reference to **FIGS. 3** and **4.**

First of all and in reference to **FIG. 3**, the building of the historical functioning database 13 is described hereinafter.

In a first step S31, one or more sensors of the industrial plant 1 collect functioning data of industrial equipment. Considering for instance the embodiment illustrated in **FIG. 1**, the first sensor 9 collects current functioning data of the distillation column 5, whereas the second sensor 11 collects current functioning data of the valve 7. As previously explained, the first sensor 9 and the second sensor 11 measure, for example continuously or at regular time intervals, the evolution of the value of certain functioning parameters characterizing the operation of the distillation column 5 and the valve 7.

The current functioning data collected by the sensors at a given moment in time are associated together. Still in reference to the example illustrated in **FIG. 1**, the value taken by a functioning parameter of the distillation column 5 at a given moment and measured by the first sensor 9 is associated with the value taken by a functioning parameter of the valve 7 at the same moment and measured by the second sensor 11. The set of values comprising at least these values related on the distillation column 5 and the valve 7 constitutes current functioning data intended to be stored in the historical functioning database 13.

In a second step S32, the value of the cost function charactering the performance of the industrial process performed by industrial equipment of the industrial plant 1 is calculated. This value thus characterizes the performance of the industrial process when the latter is performed by the industrial equipment functioning according to the current functioning data collected by the sensors.

The value of the cost function at a given moment is calculated for instance by the processing unit 15.

In a third step S33, the current functioning data collected by the sensors are stored in the historical functioning database 13. In addition, the current functioning data are associated in the historical functioning database 13 with the corresponding value of the cost function.

In reference for instance to **FIG. 2**, it appears that, at a given moment, for a given industrial process performed using the first equipment EQUIP 1 and the second equipment EQUIP2, the value of the first functioning parameter FP1 was equal to 0, the value of the second functioning parameter FP2 was equal to 1,854, the value of the third functioning parameter FP3 was equal to 835, the value of the fourth functioning parameter FP4 was equal to 2,5 and the value of the fifth functioning parameter FP5 was equal to 120,05. This set of values constitutes current functioning data and these values are thus associated together in the historical functioning database 13.

At the same time, the processing unit 15 has evaluated or measured the performance of the industrial process performed by the first and second industrial equipment EQUIP 1 and EQUIP2. More precisely, the processing unit 15 has calculated the value of the cost function CF. The value of the cost function CF was $CF_2$. This value $CF_2$ is thus associated with the corresponding current functioning data in the historical functioning database 13.

The optimisation method *per se* for the management of the industrial plant will now be described in reference to **FIG. 4.**

In the context of the present invention, an industrial process is performed within the industrial plant 1. The purpose of the method detailed below is to determine the functioning parameters of the industrial equipment used to perform the industrial process having the largest impact on the performance of the industrial process. The information of the relevant functioning parameters allows the perturbation of the concerned industrial equipment so that the cost function CF gets as close as possible to the optimal performance, determined as the best historical performance in relatable moments in time. The proposed optimisation method is performed in real-time, so while the industrial process is being implemented.

In a first step S41, the processing unit 15 selects, among the plurality of industrial equipment of the industrial plant 1, one or more functioning parameters of one or more industrial equipment used to implement the industrial process to be optimized. The performance of the industrial process is characterized by a cost function.

In the following, it is assumed for the sake of simplification that several industrial equipment are used to perform the industrial process and that several functioning parameters are selected. However, the skilled person understands here that an industrial process may be implemented using only one industrial equipment. It is also possible that the performance of the industrial process depends only on one functioning parameter.

The selection of the functioning parameters comprises for instance filtering the non-numeric functioning parameters. Furthermore, selecting the functioning parameters may also comprise filtering the functioning parameters taking only one value in all historical relevant moments in time. In parallel, selecting the functioning parameters may also comprise filtering the functioning parameters whose value cannot be modified. For instance, in an industrial plant, the external temperature may be a functioning parameter having an impact on the performance of an industrial process. However, since the external temperature cannot be modified, this functioning parameter may not be taken into account in the present method.

The functioning parameters mentioned in the following description refer to the functioning parameters selected in the step S41 after filtering.

In a second step S42, the processing unit 15 generates target functioning data of the functioning parameters selected in the previous step.

In a substep S421, historical functioning data of the industrial equipment are retrieved from the historical functioning database 13. The historical functioning database 13 can be built as explained above in reference to **FIG. 3** or in another way. More precisely, the historical functioning data retrieved from the historical functioning database 13 are historical functioning data related to the functioning parameters selected in step S41.

In a substep S422, the processing unit 15 determines N sets of historical functioning data among the retrieved and possibly filtered historical functioning data, N being a positive integer, so that the N sets of historical functioning data correspond to the N values closest to an optimum of the cost function. For instance, N is equal to 3.

According to a preferred embodiment, the processing unit 15 filters each non-reachable set of historical functioning data before determining N sets of historical functioning data. For instance, a set of historical functioning data is non-reachable if the absolute difference between the current value of a non-modifiable functioning parameter and the value of said non-modifiable functioning parameter corresponding to said set of historical functioning data is greater than or equal to a predetermined threshold. Alternatively to the absolute difference, a relative difference may also be calculated. The condition then relates to a predetermined percentage.

In other words, the processing unit 15 only selects N sets of historical functioning data among reachable historical functioning data. As previously explained, the functioning parameters may also comprise functioning parameters whose value cannot be modified such as the external temperature. Since it is not possible to modify such functioning parameters, the historical functioning data corresponding to situations in which the respective values of one or more non-modifiable functioning parameters are not reachable from the current situation are filtered.

In reference again to the example illustrated in **FIG. 2**, the three values closest to the optimum of the cost function CF are respectively $CF_1$, $CF_2$ and $CF_3$. In other words, among all the historical values taken by the cost function when the industrial process is performed within the industrial plant 1, the three best values, thus the three values closest to the optimum of the cost function CF, are $CF_1$, $CF_2$ and $CF_3$. During the substep S422, the sets of historical functioning data selected in the historical functioning database 13 are the set of values of the selected functioning parameters for which it has been determined that they allow reaching respectively the three values closest to the optimum of the cost function CF. As previously explained, the optimum of the cost function CF is not necessarily the real mathematical optimum but the historical optimum. The optimum thus corresponds to the best value of the cost function CF that has been recorded and stored under similar operating conditions.

In other words, if the selected functioning parameters are all the functioning parameters illustrated in **FIG. 2**, and if N is equal to 3, the sets of historical functioning data selected from the retrieved historical functioning data are the following:

TABLE 1

|         | FP1 | FP2   | FP3 | FP4 | FP5    | Value of the cost function |
|---------|-----|-------|-----|-----|--------|----------------------------|
| 1st set | 40  | 1,856 | 860 | 2,4 | 120,15 | $CF_1$ |
| 2nd set | 0   | 1,854 | 835 | 2,5 | 120,05 | $CF_2$ |
| 3rd set | 80  | 1,853 | 855 | 1,9 | 120,00 | $CF_3$ |

Therefore, during this substep S422, the processing unit 15 determines the best combinations of values for the functioning parameters that allow to get as close as possible to the optimal performance of the industrial process when the industrial equipment used to perform the industrial process operates according to these values. Once again, the optimal performance refers here to the best performance observed, measured and stored in the past. In the sense of the present invention, it is thus possible that the optimal performance does not correspond to the best possible performance in absolute terms.

Furthermore, as explained above, filtering can be applied to the historical functioning data corresponding to situations that cannot be reached from the current situation. To illustrate this embodiment, a fourth value $CF_4$ close to the optimum of the cost function CF is considered. Such a value is not illustrated in **FIG. 2**. Similarly to the values $CF_1$, $CF_2$ and $CF_3$ mentioned above, the fourth value $CF_4$ is associated on the historical functioning database 13 with a set of historical functioning data corresponding to a set of values of the selected functioning parameters. In addition, a sixth functioning parameter FP6 (not illustrated in **FIG. 2**) is also considered. This functioning parameter FP6 cannot be modified and corresponds, for instance, to the external temperature. In the situation, i.e. the moment in time, in which the value of the cost function was equal to $CF_4$, the value of the non-modifiable functioning parameter FP6 was radically different from the current value of this parameter. Typically, a set of historical functioning data is non-reachable if the absolute difference between the current value of a non-modifiable functioning parameter and the value of said non-modifiable functioning parameter corresponding to said set of historical functioning data is greater than or equal to a predetermined threshold.

For instance, if the functioning parameter FP6 is the external temperature, the current value can be 300 K (Kelvin) whereas the external temperature was equal to 315 K (Kelvin) in the situation corresponding to the fourth value $CF_4$ of the cost function CF. Consequently, it appears that the set of historical functioning data associated with the fourth value $CF_4$ of the cost function CF is impossible to reach from the current situation. For instance, a predetermined threshold is equal to 5 K for this parameter; and the absolute difference here between the current value and the considered historical value is equal to 15 K which is greater than the predetermined threshold. This set of historical functioning data is thus filtered. Conversely, for the sets of historical functioning data stored in the historical functioning database 13 respectively corresponding to the values $CF_1$, $CF_2$ and $CF_3$ of the cost function CF, it is considered that the value of the non-modifiable functioning parameter FP6 is equal to or significantly close to the current value of this functioning parameter so that the situation in which the values $CF_1$, $CF_2$ and $CF_3$ have been reached in the past is reachable and possible from the current situation.

In a substep S423, the processing unit 15 determines, for each selected functioning parameter, a target value on the basis of the N values of this functioning parameter respectively associated with the N sets of historical function data determined in the previous substep. The target functioning data thus formed is comprised of the set of values respectively obtained for each functioning parameter.

For instance, for at least one functioning parameter, the target value corresponds to the median of the N values of the functioning parameter respectively associated with the N sets of historical functioning data. Alternatively or in parallel, for at least one selected functioning parameter, the target value corresponds to an average of the N values of said functioning parameter respectively associated with the N sets of historical functioning data.

The set of target functioning values forms the target functioning data. It must be understood here that, among the target functioning values of the target functioning data, some target functioning values can be medians and others target functioning values can be averages.

In reference once again to the example illustrated in **FIG. 2** and considering the embodiment in which the target value for a functioning parameter is the median of the three (since N is equal to 3 is this embodiment) values of this functioning parameter respectively associated with the three sets of historical functioning data detailed in the previous table 1, the target functioning data are the following:

TABLE 2

|  | $FP_1$ | $FP_2$ | $FP_3$ | $FP_4$ | $FP_5$ |
|---|---|---|---|---|---|
| Target functioning data | 40 | 1,854 | 855 | 2,4 | 120,05 |

Indeed, considering for instance the first functioning parameter FP1, the three values of this functioning parameter respectively associated with the three sets of historical functioning data previously determined in substep S422 are 0 (from the set of values to reach $CF_2$), 40 (from the set of values to reach $CF_1$) and 80 (from the set of values to reach $CF_3$). The median of 0, 40 and 80 is 40. The target value for the first functioning parameter FP1 is thus 40 and the target functioning data comprises 40.

Considering now for instance the third functioning parameter FP3, the three values of this functioning parameter respectively associated with the three sets of historical functioning data previously determined in substep S422 are 835 (from the set of values to reach $CF_2$), 855 (from the set of values to reach $CF_3$) and 860 (from the set of values to reach $CF_1$). The median of 835, 855 and 860 is 855. The target value for the third functioning parameter FP3 is thus 855 and the target functioning data comprises 855.

At the end of the step S42, the target functioning data are thus determined by the processing unit 15. The target functioning data are a set of values, each value corresponding to a selected functioning parameter and being determined on the basis of the N values of said functioning parameter respectively associated with the N sets of historical functioning data that correspond to the N closest values to the optimum of the cost function.

In a third step S43, the processing unit 15 calculates a distance between the current functioning data of the industrial equipment and the target functioning data. As previously explained, the current functioning data are collected by sensors.

According to an embodiment, calculating the distance between the current functioning data and the target functioning data comprises calculating, for each selected functioning parameter, the difference between the current value and the target value of the selected functioning parameter, the distance being defined as a set of said one or more differences.

In reference once again to **FIG. 2**, the current functioning data are illustrated as diamonds. The current functioning data and the target functioning data are thus the following for each selected functioning parameter:

TABLE 3

|  | FP1 | FP2 | FP3 | FP4 | FP5 |
|---|---|---|---|---|---|
| Current functioning data | 20 | 1,850 | 850 | 2,3 | 120,20 |
| Target functioning data | 40 | 1,854 | 855 | 2,4 | 120,05 |
| Difference | -20 | -0,04 | -5 | -0,1 | 0,15 |

In the previous table, the difference corresponds for each functioning parameter to the difference between the current functioning value and the target functioning value. Of course, it is also possible to calculate the opposite, thus the difference between the target functioning value and the current functioning value.

In a fourth step S44, each difference calculated as described above is normalized.

A difference for a given functioning parameter is normalized by dividing said difference by the difference between the greatest value and the lowest value taken by the functioning parameter from all the filtered points in time.

In reference once again to the example **FIG. 2**, the normalized difference for each selected functioning parameter is the following (with three digits after the decimal point):

TABLE 4

|  | FP1 | FP2 | FP3 | FP4 | FP5 |
|---|---|---|---|---|---|
| Difference | -20 | -0,04 | -5 | -0,1 | 0,15 |
| Greatest value | 120 | 1,857 | 870 | 2,6 | 120,20 |
| Lowest value | -20 | 1,850 | 835 | 1,8 | 119,85 |
| Normalized difference | -0,143 | -5,714 | -0,143 | -0,125 | 0,429 |

Considering for instance the fourth functioning parameter FP4, the difference between the current value and the target value is equal to -0,1. In addition and as illustrated in **FIG. 2**, the greatest value taken by the fourth functioning parameter FP4 and stored in the historical functioning database 13 is equal to 2,6, while the lowest value is equal to 1,8. The difference between the greatest value and the lowest value is thus equal to 0,8. Consequently, the normalized difference for the fourth functioning parameter FP4 is equal to -0,125.

More generally, the difference between the current functioning value and the target functioning value is normalized as follows for a given functioning parameter:

$$Diff_{norm} = \frac{V_{FP,curr} - V_{FP,targ}}{V_{FP,max} - V_{FP,min}}$$

where:

- $Diff_{norm}$ is the normalized difference for the given functioning parameter FP;
- $V_{FP,curr}$ is the current value of the functioning parameter FP;
- $V_{FP,targ}$ is the target value of the functioning parameter FP;
- $V_{FP,max}$ is the greatest value taken by the functioning parameter FP from all the historically filtered points in time; and
- $V_{FP,min}$ is the lowest value taken by the functioning parameter FP from all the historically filtered points in time.

In the following description, the distance obtained after normalizing each difference can be considered as a "normalized distance".

In a fifth step S45, the processing unit 15 calculates, for each selected functioning parameter, a statistical correlation coefficient characterizing a correlation between the selected functioning parameter and the cost function.

The literature describes different ways of quantifying the correlation between two variables. The correlation coefficient between a selected functioning parameter and the cost function is for instance the Pearson product-moment correlation coefficient obtained by dividing the covariance of the two variables, here the selected functioning parameter and the cost function, by the product of their respective standard deviations. In other words, in such an embodiment, the statistical correlation coefficient characterizing the correlation between a given functioning parameter and the cost function is calculated as follows:

$$r_{FP} = \frac{\mathrm{Cov}\,(FP, CF)}{\sigma_{FP}\sigma_{CF}} = \frac{\mathrm{E}[(FP - \mathrm{E}(FP))(CF - \mathrm{E}(CF))]}{\sigma_{FP}\sigma_{CF}}$$

where:

- $r_{FP}$ is the statistical correlation coefficient characterizing the correlation between the given functioning parameter FP and the cost function CF;
- Cov(FP,CF) is the covariance of the given functioning parameter FP and the cost function CF;
- $\sigma_{FP}$ and $\sigma_{CF}$ are the respective standard deviations of the given functioning parameter FP and the cost function CF; and
- E($FP$) and E($CF$) are the respective expected values of the given functioning parameter FP and the cost function CF.

As explained above, the skilled person knows that other statistical correlation coefficient may be calculated to evaluate the correlation between a given functioning parameter and the cost function.

In a sixth step S46, the processing unit 15 selects, on the basis of the calculated distance and each statistical correlation coefficient, a set of at least one relevant functioning parameters having the largest impact on the cost function among the one or more functioning parameters. It is understood here that this selection is performed taking into account the filtering step previously performed in step S41.

In the embodiment in which the distance is defined as a set of differences between the current functioning value and the target functioning value for each functioning parameter and in which the distance is normalized by normalizing the difference relating to each functioning parameter, the set of relevant functioning parameters is selected on the basis of the normalized distance, thus the set of normalized differences, and each statistical correlation coefficient.

In a substep S461, for each functioning parameter, the corresponding normalized difference between the current functioning value and the target functioning value is multiplied with the corresponding statistical correlation coefficient.

Indeed, as explained above, for each functioning parameter, a normalized difference has been calculated in step S44 and a statistical correlation coefficient has been calculated in S45. Therefore, for each functioning parameter as selected in step S41, the processing unit 15 can perform a multiplication between the corresponding normalized difference and the corresponding statistical correlation coefficient.

In a substep S462, the functioning parameters are classified, for instance by the processing unit 15, according to the result of the multiplication performed at the previous substep. For instance, products results are ranked in ascending order. Alternatively, the products results are ranked in descending order.

In a substep S463, the optimisation system 3 selects a predetermined number P of functioning parameters corresponding to the greatest P values of the products, P being a positive integer.

A filtering may be applied to the functioning parameters before the selection. For instance, according to an embodiment, each functioning parameter verifying one of the following conditions is filtered:

- the value of the cost function increases when the value of the functioning parameter increases, meaning they are positively correlated with each other, and the current functioning value of said functioning parameter is lower than the target functioning value; or
- the value of the cost function decreases when the value of the functioning parameter increases, or vice versa, meaning they are negatively correlated and the current functioning value of said functioning parameter is greater than the target functioning value.

In other words, a functioning parameter is filtered if setting the value of the functioning parameter to the target functioning value increases the value of the cost function.

This criterion is detailed in the table hereinafter:

TABLE 5

| Monotonicity of the cost function regarding the functioning parameter/Correlation | Difference = current value - target value | Functioning parameter to be kept or not |
|---|---|---|
| Increasing/Positive | Positive | yes |
| Increasing/Positive | Negative | no |
| Decreasing/Negative | Positive | no |
| Decreasing/Negative | Negative | yes |

In the present example, it must be understood that the cost function has to be minimized and, consequently, the criterion described above aims to avoid increasing the value of the cost function. However, the skilled person understands here that the cost function may also be a different target function which optimum is to be maximized and, in such a case, the criterion described above would aim to avoid decreasing the value of such a target function. In a general manner, the term "cost function" used in the present application must be understood as a function characterizing the performance of an industrial process. The present invention aims to reduce the value of the cost function if such a reduction corresponds to an improvement of the performance of the industrial process. Conversely, the present invention aims to increase the value of the cost function (target function) if such an increase corresponds to an improvement of the performance of the industrial process.

The skilled person understands here that the ranking of the functioning parameters on the basis of the product result and the filtering described above can be reversed.

The set of functioning parameters selected at the end of the step S46 are the most relevant functioning parameters, i.e. the functioning parameters having the largest impact on the cost function.

In a seventh step S47, the list of the relevant functioning parameters and the target functioning data are sent to the management module 17. The current functioning data can also be sent to the management module 17.

The management module 17 perturbs the industrial equipment according to the set of at least one relevant functioning parameter for improving the performance of the industrial process. More specifically, for each relevant functioning parameter, the management module 17 controls the variation of the current value of the functioning parameters in order to reach the target functioning value. In other words, the industrial equipment are perturbed in the direction given by the set of at least one relevant functioning parameter.

Considering for instance the example illustrated in **FIG. 2**, and it is supposed that the fifth functioning parameter FP5 is selected as a relevant functioning parameter. The current functioning value of the fifth functioning parameter FP5 is equal to 120,20 and the target functioning value is equal to 120,05. The management module 17 thus controls the second industrial equipment EQUIP2, since the fifth functioning parameter FP5 is one of the functioning parameters of which depends the operating mode of the second industrial equipment EQUIP2. The management module 17 thus controls the second industrial equipment EQUIP2 so that the value of the fifth functioning parameter FP5 approaches the target functioning value.

For instance, the second industrial equipment EQUIP2 is a valve and the fifth functioning parameter FP5 is the flow rate of the valve. In such a case, the management module 17 controls the actuator of the valve in order to modify the current flow rate of the valve and to approach the target flow rate. It must be noted here that the perturbation of a functioning parameter can take time before having an impact of the industrial process. Typically, it is possible in first to perturb only the functioning parameter having the largest impact. Then, according to an embodiment, once the impact on the industrial process has been observed, the functioning parameter having the second largest impact on the industrial process is perturbed and so on. Alternatively, the claimed method is performed again after perturbing the functioning parameter having the largest impact to determine which functioning parameter is the new functioning parameter having the largest impact and so on.

The present invention has several advantages.

The optimisation method can be performed in real-time and does not require upstream planning. Because of its low computation time, the proposed method can be implemented continuously to modify the conditions of implementation of an industrial process in the industrial plant.

In addition, since the method makes it possible to select relevant functioning parameters at the expense of other functioning parameters, the method allows significant savings in logistical resources, only one or a portion of the functioning parameters being adjusted at a given moment.

**Claims**

1. Optimisation method for the management of an industrial plant (1), said method being implemented using a processing unit (15) and comprising:

   - selecting (S41) one or more functioning parameters (FP1, FP2, FP3, FP4, FP5) of one or more industrial equipment (5, 7) adapted to implement an industrial process whose performance is **characterized by** a cost function (CF);
   - generating (S42) target functioning data of said one or more functioning parameters,
   - calculating (S43) a distance between current functioning data of said one or more industrial equipment and said target functioning data, said current functioning data being collected by one or more sensors;
   - calculating (S45), for each selected functioning parameter, a statistical correlation coefficient characterizing a correlation between said selected functioning parameter and the cost function;
   - selecting (S46), on the basis of the calculated distance and each statistical correlation coefficient, a set of at least one relevant functioning parameters having a largest impact on the cost function among the one or more functioning parameters; and
   - perturbing (S47) said one or more industrial equipment according to the set of at least one relevant functioning parameter to improve the performance of the industrial process.

2. Optimisation method according to claim 1, wherein selecting one or more functioning parameters comprises filtering:

   - non-numeric functioning parameters; and/or
   - functioning parameters taking only one value; and/or
   - functioning parameters whose value cannot be modified.

3. Optimisation method according to one of the previous claims, further comprising retrieving (S421) historical functioning data of said one or more industrial equipment from an historical functioning database (13), wherein the target functioning data are generated from said retrieved historical functioning database.

4. Optimisation method according to claim 3, wherein the historical functioning database is built as follows:

  - collecting (S31), using said one or more sensors (9, 11), functioning data of said one or more industrial equipment, said functioning data comprising one value for each functioning parameter of said one or more industrial equipment;
  - determining (S32) a value of the cost function corresponding to the collected functioning data;
  - storing (S33) said functioning data in the historical functioning database, said functioning data being associated with the corresponding value of the cost function.

5. Optimisation method according to claim 3 or 4, the historical functioning data being associated in the historical functioning database with a value of the cost function corresponding to the performance of the industrial process when the latter is performed by said one or more industrial equipment functioning according to said historical functioning data, the target functioning data comprising a set of one or more target values respectively associated with said one or more selected functioning parameters, wherein the target functioning data are generated as follows:

  - determining (S422) N sets of historical functioning data from the historical functioning database, N being a positive integer, a set of historical functioning data comprising one value for each selected functioning parameter, so that said N sets of historical functioning data correspond to N values closest to an optimum of the cost function; and
  - for each selected functioning parameter, determining (S423) a target value according to the N values of said functioning parameter respectively associated with the N sets of historical functioning data;

  the target functioning data comprising the set of target values.

6. Optimisation method according to claim 5, wherein, for at least one selected functioning parameter, the target value corresponds to a median of the N values of said functioning parameter respectively associated with the N sets of historical functioning data.

7. Optimisation method according to claim 5 or 6, wherein, for at least one selected functioning parameter, the target value corresponds to an average of the N values of said functioning parameter respectively associated with the N sets of historical functioning data.

8. Optimisation method according to one of the claims 5 to 7, further comprising filtering each non-reachable set of historical functioning data before determining N sets of historical functioning data.

9. Optimisation method according to claim 8, wherein a set of historical functioning data is non-reachable if the absolute difference between the current value of a non-modifiable functioning parameter and the value of said non-modifiable functioning parameter corresponding to said set of historical functioning data is greater than or equal to a predetermined threshold.

10. Optimisation method according to one of the previous claims, the current functioning data comprising a set of one or more current values respectively associated with said one or more functioning parameters and the target functioning data comprising a set of one or more target values respectively associated with said one or more selected functioning parameters, wherein calculating the distance between the current functioning data and the target functioning data comprises calculating, for each selected functioning parameter, the difference between the current value and the target value of said selected functioning parameter, the distance being defined as a set of said differences.

11. Optimisation method according to claim 10, further comprising normalizing (S44) each difference associated with a functioning parameter by dividing said difference by the difference between a greatest value and a lowest value taken by said functioning parameter.

12. Optimisation method according to claim 11, wherein selecting the set of at least one relevant functioning parameter comprises:

  - multiplying (S461), for each functioning parameter, the corresponding normalized difference between the current functioning value and the target functioning value and the corresponding statistical correlation coefficient;
  - selecting (S462, S463) a predetermined number P of functioning parameters corresponding to the greatest P values of the products, P being a positive integer.

13. Optimisation method according to one of the previous claims, further comprising filtering each selected functioning parameter verifying one of the following conditions:

- the value of the cost function increases when the value of the functioning parameter increases and the current functioning value of said functioning parameter is lower than the target functioning value; or
- the value of the cost function decreases when the value of the functioning parameter increases and the current functioning value of said functioning parameter is greater than the target functioning value.

14. Computer program, comprising instructions for implementing the method according to one of the previous claims, when said instructions are implemented by at least one processor (15).

15. Optimisation system (3) for the management of an industrial plant (1), comprising:

- one or more sensors (9, 11) adapted for collecting current functioning data relating to functioning parameters of a plurality of industrial equipment;
- a processing unit (15) configured to :

  ◦ select one or more functioning parameters (FP1, FP2, FP3, FP4, FP5) of one or more industrial equipment (5, 7) adapted to implement an industrial process whose performance is **characterized by** a cost function (CF);
  ◦ generate target functioning data of said one or more functioning parameters,
  ◦ calculate a distance between the current functioning data of said one or more industrial equipment and said target functioning data;
  ◦ calculate, for each selected functioning parameter, a statistical correlation coefficient characterizing a correlation between said selected functioning parameter and said cost function;
  ◦ select, on the basis of the calculated distance and each statistical correlation coefficient, a set of at least one relevant functioning parameters having a largest impact on the cost function among said one or more functioning parameters; and

- a management module (17) adapted to perturb said one or more industrial equipment according to the set of at least one relevant functioning parameter to improve the performance of the industrial process.

16. Optimisation system according to claim 15, further comprising a historical functioning database (13) adapted to store historical functioning data of the plurality of industrial equipment.

FIG. 1

**FIG. 2**

EP 3 792 708 A1

COLL — S31

DET CF — S32

STOR — S33

**FIG. 3**

SEL FP — S41

RETR HFD — S421
MED — S422
FORM — S423
S42

DIST — S43

NORM — S44

STAT CORR — S45

MULT — S461
ORD — S462
SEL RFP — S463
S46

SET — S47

**FIG. 4**

Europäisches
Patentamt

European
Patent Office

Office européen
des brevets

# EUROPEAN SEARCH REPORT

Application Number

EP 19 19 6526

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/116896 A1 (ABB TECHNOLOGY LTD [CH]) 28 July 2016 (2016-07-28) | 1-11, 13-16 | INV.<br>G05B19/042 |
| A | * paragraphs [0001] - [0004], [0021], [0032] - [0378]; claims 1-6; figures 1, 2 * | 12 | G05B13/04<br>G06Q50/04 |
| | ----- | | ADD. |
| X | WO 2008/112823 A1 (EMERSON PROCESS MANAGEMENT [US] ET AL.) 18 September 2008 (2008-09-18) | 1,14,15 | G05B23/02 |
| A | * claim 1 * | 2-13,16 | |
| | ----- | | |
| A | US 2002/128731 A1 (WEGERICH STEPHAN W [US] ET AL) 12 September 2002 (2002-09-12) * paragraphs [0011] - [0013]; claim 1 * | 1-16 | |
| | ----- | | |

| | |
|---|---|
| | TECHNICAL FIELDS SEARCHED (IPC) |
| | G05B<br>G06Q |

The present search report has been drawn up for all claims

| Place of search | Date of completion of the search | Examiner |
|---|---|---|
| Munich | 9 March 2020 | Juillot, Olivier J. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 19 6526

This annex lists the patent family members relating to the patent documents cited in the above-mentioned European search report.
The members are as contained in the European Patent Office EDP file on
The European Patent Office is in no way liable for these particulars which are merely given for the purpose of information.

09-03-2020

| Patent document cited in search report | | | Publication date | Patent family member(s) | | | Publication date |
|---|---|---|---|---|---|---|---|
| WO 2016116896 | A1 | | 28-07-2016 | CN | 107407917 | A | 28-11-2017 |
| | | | | EP | 3248077 | A1 | 29-11-2017 |
| | | | | US | 2018004193 | A1 | 04-01-2018 |
| | | | | WO | 2016116896 | A1 | 28-07-2016 |
| WO 2008112823 | A1 | | 18-09-2008 | CA | 2679632 | A1 | 18-09-2008 |
| | | | | CA | 2680706 | A1 | 18-09-2008 |
| | | | | CN | 101657765 | A | 24-02-2010 |
| | | | | CN | 101689050 | A | 31-03-2010 |
| | | | | CN | 103257641 | A | 21-08-2013 |
| | | | | CN | 103792927 | A | 14-05-2014 |
| | | | | EP | 2126649 | A2 | 02-12-2009 |
| | | | | EP | 2132607 | A1 | 16-12-2009 |
| | | | | EP | 2444869 | A1 | 25-04-2012 |
| | | | | GB | 2459593 | A | 04-11-2009 |
| | | | | GB | 2459594 | A | 04-11-2009 |
| | | | | HK | 1134346 | A1 | 10-08-2012 |
| | | | | HK | 1134348 | A1 | 29-06-2012 |
| | | | | US | 2009012653 | A1 | 08-01-2009 |
| | | | | WO | 2008112791 | A2 | 18-09-2008 |
| | | | | WO | 2008112823 | A1 | 18-09-2008 |
| US 2002128731 | A1 | | 12-09-2002 | NONE | | | |

EPO FORM P0459

For more details about this annex : see Official Journal of the European Patent Office, No. 12/82